# EUROPEAN PATENT APPLICATION

(11) **EP 3 974 229 A1**
(43) Date of publication of application: **30.03.2022**
(21) Application number: 21197899.4
(22) Date of filing: 21.09.2021
(51) Int. Cl.: B60K 11/06, F02M 35/16

(54) **INTAKE AND EXHAUST SYSTEM AND ALL-TERRAIN VEHICLE**

(30) Priority: 27.09.2020 CN 202022155632 U
(71) Applicant: Segway Technology Co., Ltd., Jiangsu 213000 (CN)
(72) Inventor: QUE, Weigang, Changzhou, 213000 (CN); CHEN, Mingtang, Changzhou, 213000 (CN)
(74) Representative: Papa, Elisabetta

(57) **Abstract**

Embodiments of the present disclosure relate to an intake and exhaust system and an all-terrain vehicle. The intake and exhaust system includes a first intake and exhaust structure and a second intake and exhaust structure. The first intake and exhaust structure includes an intake pipe coupled to a transmission and a first exhaust pipe coupled to the transmission. The second intake and exhaust structure includes an air filter coupled to an air inlet of the engine and a second exhaust pipe coupled to the engine. A port of the first exhaust pipe away from the transmission faces the second exhaust pipe.

## Description

### FIELD

The present disclosure relates to the field of vehicles manufacturing technologies, and more particularly to an intake and exhaust system and an all-terrain vehicle.

### BACKGROUND

At present, all-terrain vehicles are generally provided with a rear-mounted engine. That is, a powertrain including an engine, a transmission, etc., is provided at a rear part of a cockpit, and a cargo box will be provided above the powertrain. The engine and the transmission have their own intake and exhaust systems, which are usually independent of each other. The low-temperature gas discharged by the transmission is directly discharged outside the structure, and not utilized effectively. Meanwhile, it is hard to replace and maintain the air filter cartridge of the intake and exhaust system of the engine due to the hindrance of the cargo box or like structure.

### SUMMARY

In order to address at least one technical problem existing in the related art, embodiments of the present disclosure provide an intake and exhaust system and an all-terrain vehicle.

According to one aspect, the present invention provides an intake and exhaust system as set out in claim 1. According to another aspect, the present invention provides an all-terrain vehicle as set out in claim 15. Any embodiment in the present disclosure that does not fall within the scope of the present invention should be regarded as an example for understanding the present invention.

In a first face aspect, embodiments of the present disclosure provide an intake and exhaust system, which includes a first intake and exhaust structure and a second intake and exhaust structure. The first intake and exhaust structure includes an intake pipe provided above a transmission and having an end coupled to the transmission and a first exhaust pipe coupled to the transmission. The second intake and exhaust structure includes an air filter coupled to an air inlet of the engine and a second exhaust pipe coupled to an engine. A port of the first exhaust pipe away from the transmission faces the second exhaust pipe.

In some embodiments, the port of the first exhaust pipe away from the transmission directly faces a junction of a cylinder of the engine and the second exhaust pipe.

In some embodiments, the intake pipe is provided above the transmission and located above the air filter.

In some embodiments, the air filter and the transmission are both located at a first side of the engine, and the second exhaust pipe is located at a second side of the exhaust pipe.

In some embodiments, the air filter includes a first air intake chamber and a filter cartridge chamber, the filter cartridge chamber includes opposite first and second ends and an air filter cartridge provided between the first and second ends, the first end is in communication with the first air intake chamber, and the second end is in communication with the air inlet of the engine.

In some embodiments, the second intake and exhaust structure further includes an expansion chamber provided between the second end of the filter cartridge chamber and the air inlet of the engine.

In some embodiments, the expansion chamber is provided above the transmission.

In some embodiments, the expansion chamber is provided with two air outlet ends coupled to two air inlets of the engine, respectively.

In some embodiments, a pipeline coupled between the expansion chamber and the air inlet of the engine is provided with a throttle.

In some embodiments, the first air intake chamber and the filter cartridge chamber are located behind a front passenger position.

In some embodiments, the filter cartridge chamber defines a filter cartridge hole for ingress and egress of the air filter cartridge, and the filter cartridge hole is provided with a detachable cover plate.

In some embodiments, the air inlet of the engine is located at a rear part of the engine, and the junction of the second exhaust pipe and the engine is located at a front part of the engine.

In some embodiments, the first intake and exhaust structure further includes a second air intake chamber provided above the transmission, the second air intake chamber defines two air outlet holes coupled to ends of two intake pipes away from the transmission, respectively.

In a second aspect, embodiments of the present disclosure provide an all-terrain vehicle, which includes an engine, a transmission system and an intake and exhaust system according to any one of the above embodiments. The transmission system provided behind the engine and includes a transmission. The intake and exhaust system includes an expansion chamber located between an air filter and the air inlet of the engine, and the expansion chamber is located above the transmission system.

In the technical solution according to embodiments of the present disclosure, the port of the first exhaust pipe of the first intake and exhaust structure away from the transmission faces the second exhaust pipe coupled to the engine such that low-temperature gas discharged by the transmission assists in cooling the second exhaust pipe and the engine. The machine's own structure is used to perform effective heat dissipation, and the operational performance of the engine is promoted.

### BRIEF DESCRIPTION OF THE DRAWINGS

To describe technical solutions in embodiments of the present disclosure or in the related art more clearly, the following will briefly introduce the accompanying drawings required for the description of the embodiments or the related art. Obviously, the accompanying drawings described below show some embodiments of the present disclosure, and those skilled in the art can obtain other drawings based on these drawings without paying creative efforts.
FIG. 1 is a perspective schematic view of an intake and exhaust system and a vehicle powertrain according to an embodiment of the present disclosure.
FIG. 2 is a perspective exploded view of an air filter of an intake and exhaust system according to an embodiment of the present disclosure.
FIG. 3 is a perspective schematic view of a transmission intake structure of an intake and exhaust system according to an embodiment of the present disclosure.
FIG. 4 is a perspective schematic view of a transmission exhaust structure of an intake and exhaust system according to an embodiment of the present disclosure.
FIG. 5 is another perspective schematic view of an intake and exhaust system according to an embodiment of the present disclosure.
FIG. 6 is a perspective schematic view of an all-terrain vehicle according to an embodiment of the present disclosure.

### BRIEF DESCRIPTION OF THE DRAWINGS

Implementations of the present disclosure will be described in detail below with reference to the accompanying drawings and embodiments, so that realization process of how the present disclosure applies technical means to solve technical problems and achieve technical effects can be fully understood and implemented accordingly.

For example, certain words are used in the specification and the claims to refer to specific components. Those skilled in the art should understand that hardware manufacturers may use different terms to refer to the same component. This specification and claims do not use differences in names as a way of distinguishing components, but use differences in functions of components as a criterion for distinguishing. For example, "include" mentioned throughout the specification and claims is an open term, it should be interpreted as "include but not limited to". "Substantially" means that within an acceptable error range, those skilled in the art can solve the technical problem within a certain error range, and basically achieve the technical effect. In addition, the term "coupled" or "electrically connected" herein includes any direct and indirect electrical coupling means. Therefore, if the specification describes that a first device is coupled to a second device, it means that the first device can be directly electrically coupled to the second device, or indirectly electrically coupled to the second device through other devices or coupling means. The following description of the specification is an implementation for implementing the present disclosure, but the description is for the purpose of explaining general principles of the present disclosure, and is not intended to limit the scope of the present disclosure. The protection scope of the present disclosure shall be subject to those defined by the appended claims.

It should also be noted that the terms "include", "comprise" or any other variants thereof are intended to cover non-exclusive inclusion, so that a process, method, product, or system that includes a series of elements includes not only those elements, but also other elements that are not explicitly listed, or also includes elements inherent to the process, method, product, or system. If there are no more restrictions, an element defined by the sentence "including a..." does not exclude the existence of other identical elements in the process, method, product or system that includes the element.

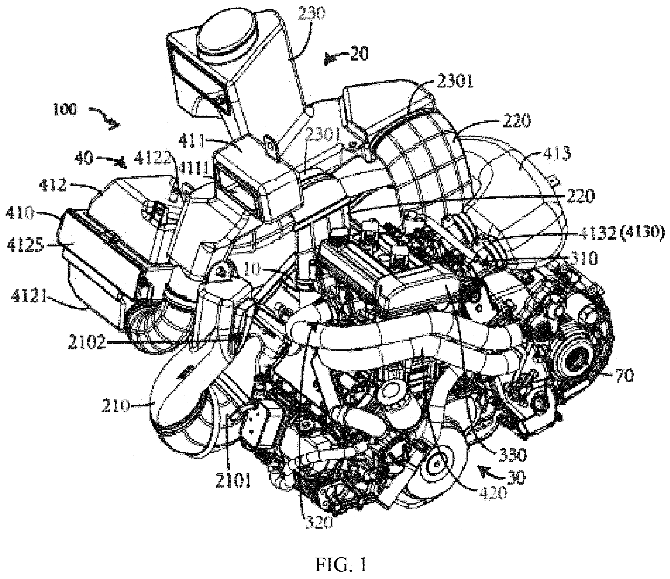

FIG. 1 is a perspective schematic view of an intake and exhaust system 100 and a vehicle powertrain according to an embodiment of the present disclosure. The intake and exhaust system 100 of embodiments of the present disclosure includes a first intake and exhaust structure 20 for a transmission 10 and a second intake and exhaust structure 40 for an engine 30.

Herein, the intake and exhaust system 100 includes but is not limited to an intake and exhaust system of an all-terrain vehicle, a go-kart, and a lawn mover, etc. The engine 30 includes but is not limited to an internal combustion engine providing power for a vehicle, and the transmission 10 includes but is not limited to a constantly variable transmission (CVT) used with the engine 30.

The first intake and exhaust structure 20 includes a first exhaust pipe 210 and an intake pipe 220. The intake pipe 220 has a first end coupled to the transmission 10 and a second end as an air inlet. The first exhaust pipe 210 is coupled to the transmission 10, and used to discharge the air to the outside. The first exhaust pipe 210 and the intake pipe 220 are generally provided at two positions of the transmission 10. For example, the intake pipe 220 is provided above the transmission 10, while the first exhaust pipe 210 is provided in front of the transmission 10.

The second intake and exhaust structure 40 includes an air filter 410 and a second exhaust pipe 420. The air filter 410 is coupled to an air inlet 310 of the engine 30, and the second exhaust pipe 420 is coupled to the engine 30. In an embodiment, the air filter 410 is used to filter the air entering the engine 30, and the second exhaust pipe 420 is coupled to an exhaust port 320 of the engine 30, and used to discharge the air in the engine 30 and the burned gases in the combustion engine to the outside.

A port of the first exhaust pipe 210 away from the transmission 10 faces the second exhaust pipe 420. In an embodiment, the first exhaust pipe 210 has two ports, i.e., a first port 2101 and a second port 2102. The first port 2101 is coupled to an air outlet of the transmission 10, and the second port 2102 faces the second exhaust pipe 420. That is, the second port 2102 herein faces the second exhaust pipe 420 directly. Since the gas discharged by the transmission 10 has a low temperature which may be construed to be very nearly the same as a temperature of the air entering the transmission 10, when the gas discharged via the second port 2102 is blown to the second exhaust pipe 420, it has an air-cooling effect on the second exhaust pipe 420. Furthermore, since an air inlet of the second exhaust pipe 420 is coupled to the engine 30 and an air outlet of the second exhaust pipe 420 is located behind the engine 30, i.e., the second exhaust pipe 420 is arranged along an outer wall of the engine 30, assisted cooling and heat dissipation effect on the engine 30 is formed. That is, the machine's own structure can perform effective heat dissipation, and the operational performance of the engine is promoted.

Additionally, in other embodiments of the present disclosure, in order to promote assisted cooling effect of the gas discharged by the transmission 10 on the engine 30, the port of the first exhaust pipe 210 away from the transmission 10 directly faces a junction of a cylinder 330 of the engine 30 and the second exhaust pipe 420.

In an embodiment, the second port 2102 of the first exhaust pipe 210 and the cylinder 330 are at the same level, and the second port 2102 is directly opposite a set position of the junction of the cylinder 330 and the second exhaust pipe 420, to allow the low-temperature air discharged by the transmission 10 to cool and dissipate heat from the cylinder 330 and the second exhaust pipe 420 via the second port 2102.

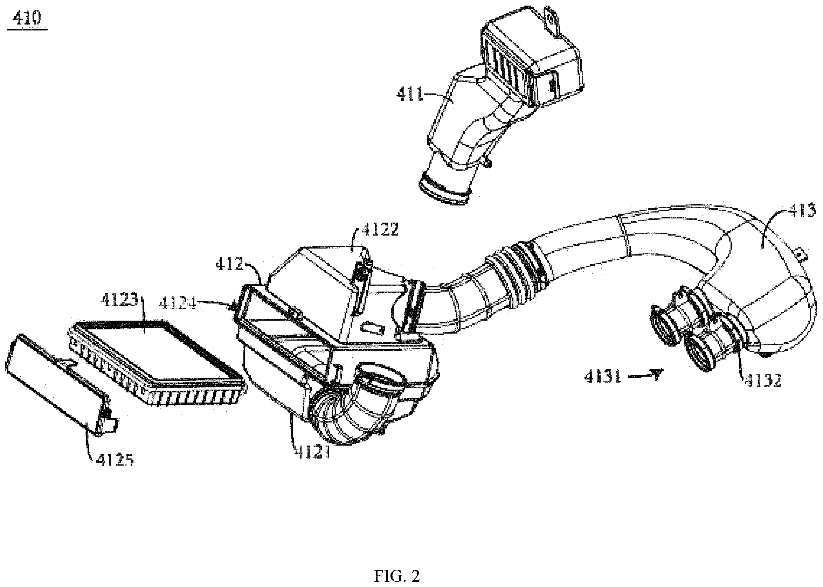

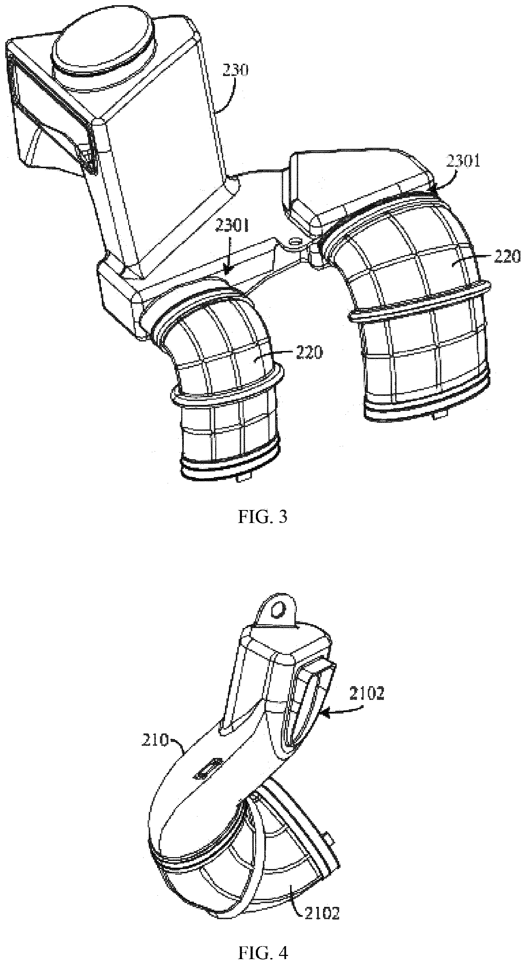

Further, with reference to FIGS. 2 to 4, the intake pipe 220 is provided above the transmission 10 and located above the air filter 410.

In an embodiment, the intake pipe 220 has the first end coupled to a top of the transmission 10 and the second end provided above the transmission 10. The end of the intake pipe 220 away from the transmission 10 is higher than the air filter 410, this design not only can ensure spatial arrangement of the vehicle powertrain, but also can make the air inlet of the intake pipe 220 at a higher position to improve quality of the air entering the transmission 10.

Additionally, the air filter 410 and the transmission 10 are both located at a first side of the engine 30, and the second exhaust pipe 420 is located at a second side of the engine 30.

In an embodiment, in the spatial arrangement, the air filter 410 and the transmission 10 are provided at the same side of the engine 30 and opposite the set position of the second exhaust pipe 420. That is, they are provided at two opposite sides of the engine 30. This design not only can satisfy small spatial arrangement of the vehicle powertrain, but also can position intake and exhaust of the vehicle powertrain at two opposite sides of the engine 30 respectively, to prevent the low-quality gas from entering the vehicle powertrain, facilitating improvement of intake air quality of the vehicle powertrain.

Further, the air filter 410 includes a first air intake chamber 411 and a filter cartridge chamber 412. The filter cartridge chamber 412 includes opposite first and second ends 4121 and 4122. The first end 4121 and the second end 4122 are provided with an air filter cartridge 4123 therebetween. The first end 4121 is in communication with the first air intake chamber 411, and the second end 4122 is in communication with the air inlet 310 of the engine 30.

In an embodiment, the first air intake chamber 411 defines a plurality of air inlet holes 4111 for air entry. The filter cartridge chamber 412 is internally provided with the air filter cartridge 4123 for filtering the air. The first end 4121 and the second end 4122 are positioned at two sides of the air filter cartridge 4123 respectively. The first end 4121 is an air inlet end of the filter cartridge chamber 412 and in communication with the first air intake chamber 411, and the second end 4122 is an air outlet end of the filter cartridge chamber 412 and in communication with the air inlet 310 of the engine 30. Thus, the outside air enters an interior of the engine 30 via the first air intake chamber 411, the first end 4121, the air filter cartridge 4123, the second end 4122, and the air inlet 310 of the engine 30.

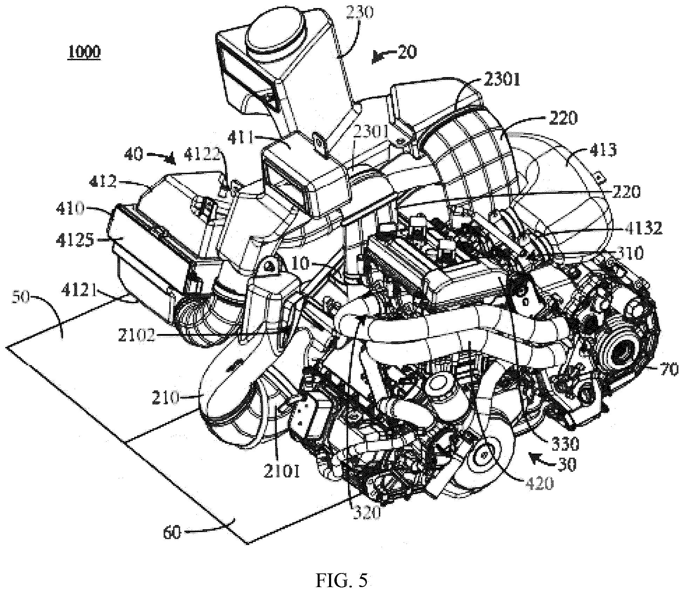

Further, with reference to FIG. 5, the first air intake chamber 411 and the filter cartridge chamber 412 are located behind a front passenger position 50.

In an embodiment, the engine 30 and the transmission 10 are arranged in a left-and-right direction, and a driver position 60 and the front passenger position 50 are provided in front of them respectively. The first air intake chamber 411 and the filter cartridge chamber 412 are both located behind the front passenger position 50. That is, the first air intake chamber 411 and the filter cartridge chamber 412 are provided behind a seat backrest of the front passenger position 50. Generally, a height of the air inlet hole 4111 in the first air intake chamber 411 is greater than a height of the filter cartridge chamber 412. This design not only can ensure smooth entrance of the air, but also can facilitate maintenance and replacement of the air filter 410, such as replacement of the air filter cartridge 4123.

Additionally, in other embodiments of the present disclosure, in order to facilitate replacement of the air filter cartridge 4123, the filter cartridge chamber 412 employs a quick release structure. In an embodiment, the filter cartridge chamber 412 defines a filter cartridge hole 4124 for ingress and egress of the air filter cartridge 4123, and the filter cartridge hole 4124 is provided with a detachable cover plate 4125.

In an embodiment, the filter cartridge chamber 412 defines the filter cartridge hole 4124 in a direction of the front passenger position 50, and the air filter cartridge 4123 can enter and exit from the filter cartridge chamber 412 through the filter cartridge hole 4124, to accomplish replacement of the filter cartridge. The cover plate 4125 is detachably provided at the filter cartridge hole 4124, to ensure that the filter cartridge chamber 412 is closed. Herein, detachable coupling between the cover plate 4125 and the filter cartridge hole 4124 includes but is not limited to a snap-fit coupling, a screw coupling, etc.

Further, the second intake and exhaust structure 40 further includes an expansion chamber 413 provided between the second end 4122 of the filter cartridge chamber 412 and the air inlet 310 of the engine 30.

In an embodiment, the expansion chamber 413 has a first end coupled to the second end 4122 of the filter cartridge chamber 412 and a second end coupled to the air inlet 310 of the engine 30. The expansion chamber 413 herein may be regarded as a collecting chamber or a buffering chamber for the air, which ensures that the air can continuously and uniformly enter the engine 30, to improve operational performance of the engine 30.

Additionally, the expansion chamber 413 is located above the transmission 10. In an embodiment, the expansion chamber 413 has a large accommodating space to collect and buffer the air entering from the air filter 410. By providing the expansion chamber 413 above the transmission 10, it can not only meet the accommodating requirements of the air, but also reduce the space occupied by the vehicle powertrain to some extent, to improve reasonability of spatial arrangement of the vehicle.

Further, the expansion chamber 413 is provided with two air outlet ends 4131 coupled to two air inlets 310 of the engine 30, respectively.

In an embodiment, the expansion chamber 413 includes a storage space with a larger volume for air storage. The two air outlet ends 4131 are provided at a tail end of the storage space. The two air outlet ends 4131 are coupled to the two air inlets 310 of the engine 30 respectively. It could be envisaged that the two air inlets 310 of the engine 30 are air inlets of two cylinders 330 of the engine 30. That is, the number of the air outlet ends 4131 herein actually matches the number of the cylinders 330 of the engine 30. It is merely illustrated herein that two air outlet ends 4131 mate with air inlets of two cylinders 330, but this does not constitute limitation to other mating forms. It is also possible that more air outlet ends 4131 mate with air inlets of more cylinders 330.

Additionally, in order to control speed and flow of the air entering the engine 30 from the expansion chamber 413, a pipeline 4130 coupled between the expansion chamber 413 and the air inlet 310 of the engine 30 is provided with a throttle 4132. The throttle 4132 is controlled by a controller of the vehicle. The speed and flow of the air entering the engine 30 from the expansion chamber 413 is controlled by opening, closing and opening degree of the throttle 4132.

Further, the air inlet 310 of the engine 30 is located at a rear part of the engine 30, and the junction of the second exhaust pipe 420 and the engine 30 is located at a front part of the engine 30.

In an embodiment, since the first air intake chamber 411 and the filter cartridge chamber 412 of the air filter 410 are provided behind the front passenger position 50, and located above and in front of the transmission 10, the air inlet 310 of the engine 30 is located in the rear part of the engine 30 in order to facilitate arrangement of the air filter 410, in particular of the expansion chamber 413. That is, the air filter 410 surrounds a periphery of the transmission 10 and is coupled to the air inlet 310 of the engine 30 at the rear part of the engine 30. Additionally, in order to enable the second end 2102 of the first exhaust pipe 210 to perform assisted cooling on the second exhaust pipe 420 and the engine 30, the junction of the second exhaust pipe 420 and the engine 30 is located at the front part of the engine 30, i.e., a position closer to the port of the second end 2102 of the first exhaust pipe 210.

Additionally, the first intake and exhaust structure 20 further includes a second air intake chamber 230. The second air intake chamber 230 is provided above the transmission 10. Two intake pipes 220 are provided, the transmission 10 is a continuously variable transmission (CVT), and the two intake pipes 220 deliver cold air to a driving disc and a driven disc of the continuously variable transmission (CVT) respectively for cooling. Correspondingly, the second air intake chamber 230 defines two air outlet holes 2301, and the air outlet holes 2301 are coupled to respective intake pipes 220.

In an embodiment, the second air intake chamber 230 is provided above the transmission 10 and has an effect of buffering and storing the air. A top side of the second air intake chamber 230 defines an, and another side of the second air intake chamber 230 defines the two air outlet holes 2301. The two air outlet holes 2301 are coupled to the intake pipes 220, respectively.

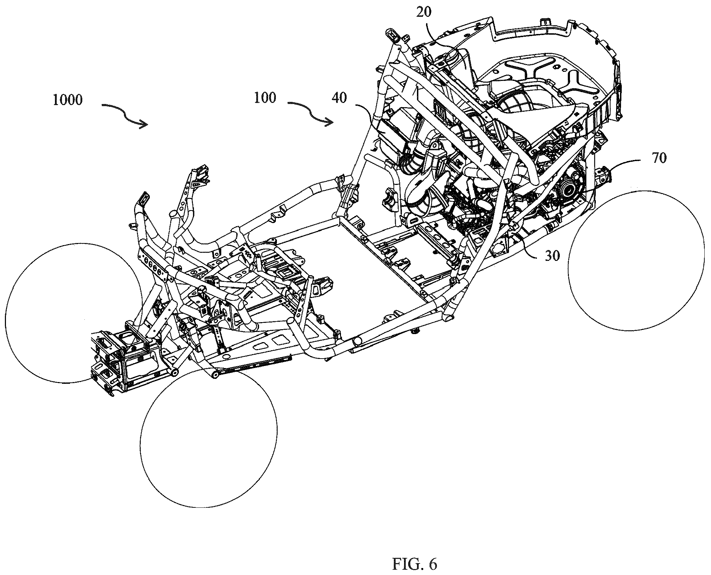

Embodiments of the present disclosure further provide an all-terrain vehicle 1000. With reference to FIGS. 1 and 6, the all-terrain vehicle 1000 includes an intake and exhaust system 100 according to any one of the above embodiments and a transmission system 70 provided behind the engine 30. The intake and exhaust system 100 includes an expansion chamber 413 located between an air filter 410 and the air inlet 310 of the engine 30, and the expansion chamber 413 is located above the transmission system 70.

In an embodiment, the transmission system 70 includes but is not limited to an integration of a transmission and a vehicle rear axle, and is used to transfer the power from the engine 30 to the wheels, and thus drive the vehicle to travel. The transmission system 70 is provided behind the engine 30, while the expansion chamber 413 provided between the air filter 410 and the air inlet 310 of the engine 30 is located above the transmission system 70. This design not only makes the vehicle structure arranged in an up-and-down direction meet the design requirements for narrow space in the vehicle, but also increases a length of the expansion chamber 413, to increase volume of the expansion chamber 413 and further promote air storage and buffering performance of the expansion chamber 413, thereby facilitating promotion of operational performance of the engine 30 and thus functional performance of the all-terrain vehicle 1000.

Herein, specific structure of the intake and exhaust system 100 may refer to the description of the above embodiments, which will not be repeated herein. Other structures and coupling relationships of the all-terrain vehicle 1000 are well known by those skilled in the art, which will not be described in detail herein.

It should be noted that although the specific implementations of the present disclosure are described in detail in conjunction with the accompanying drawings, they should not be understood as limiting the protection scope of the present disclosure. In the case of no conflict in structure, the structures of the various parts mentioned in the above embodiments can be combined with each other. To avoid repetition, the technical solutions obtained after the combination will not be repeated here, but the technical solutions obtained after the combination should also fall within the protection scope of the disclosure. Within the scope described in the claims, various modifications and variations that can be made by those skilled in the art without creative work still fall within the protection scope of the present disclosure.

The examples of the embodiments of the present disclosure are intended to concisely illustrate the technical characteristics of the embodiments of the present disclosure, so that those skilled in the art can intuitively understand the technical characteristics of the embodiments of the present disclosure, and are not intended to improperly limit the embodiments of the present disclosure.

The device embodiments described above are merely illustrative, the units described as separate components may or may not be physically separated, and the components displayed as units may or may not be physical units, that is, they may be located in one place, or it can be distributed to multiple network units, and some or all of the modules can be selected according to actual needs to achieve the purpose of the solution of the embodiment, which can be understood and implemented by those of ordinary skill in the art without creative work.

The above description shows and describes several embodiments of the present disclosure. However, as mentioned above, it should be understood that the embodiments of the present disclosure are not limited to the form disclosed herein and should not be regarded as exclusion of other embodiments, but can be used in various other combinations, modifications and environments, and can be modified through the above teachings or technology or knowledge in related fields within the scope of the concept of the present disclosure described herein.

## Claims

1. An intake and exhaust system (100) for an all-terrain vehicle (1000) having an engine (30) and a transmission (10), comprising:
a first intake and exhaust structure (20) comprising an intake pipe (220) coupled to the transmission (10) and a first exhaust pipe (210) coupled to the transmission (10); and
a second intake and exhaust structure (40) comprising an air filter (410) coupled to an air inlet (310) of the engine (30) and a second exhaust pipe (420) coupled to the engine (30),
wherein a port of the first exhaust pipe (210) away from the transmission (10) faces the second exhaust pipe (420).

2. The intake and exhaust system (100) according to claim 1, wherein the port of the first exhaust pipe (210) away from the transmission (10) directly faces a junction of a cylinder (330) of the engine (30) and the second exhaust pipe (420).

3. The intake and exhaust system (100) according to claim 2, wherein the air inlet (310) of the engine (30) is located at a rear part of the engine (30), and the junction of the second exhaust pipe (420) and the cylinder (330) of the engine (30) is located at a front part of the engine (30).

4. The intake and exhaust system (100) according to any one of claims 1 to 3, wherein the intake pipe (220) is provided above the transmission (10) and located above the air filter (410).

5. The intake and exhaust system (100) according to claim 4, wherein the intake pipe (220) has a first end coupled to a top of the transmission (10) and a second end provided above the transmission (10), and the second end of the intake pipe (220) is higher than the air filter (410).

6. The intake and exhaust system (100) according to any one of claims 1 to 5, wherein the air filter (410) and the transmission (10) are both located at a first side of the engine (30), and the second exhaust pipe (420) is located at a second side of the engine (30).

7. The intake and exhaust system (100) according to any one of claims 1 to 6, wherein the air filter (410) comprises a first air intake chamber (411) and a filter cartridge chamber (412), the filter cartridge chamber (412) comprises opposite first and second ends (4121, 4122), and an air filter cartridge (4123) provided between the first and the second ends (4121, 4122), the first end (4121) is in communication with the first air intake chamber (411), and the second end (4122) is in communication with the air inlet (310) of the engine (30).

8. The intake and exhaust system (100) according to claim 7, wherein the first air intake chamber (411) defines an air inlet hole (4111), and the air inlet hole (4111) has a height greater than a height of the filter cartridge chamber (412).

9. The intake and exhaust system (100) according to claim 7 or 8, wherein the filter cartridge chamber (412) defines a filter cartridge hole (4124) for ingress and egress of the air filter cartridge (4123), and the filter cartridge hole (4124) is provided with a detachable cover plate (4125).

10. The intake and exhaust system (100) according to any one of claims 7 to 9, wherein the second intake and exhaust structure (40) further comprises an expansion chamber (413) provided between the second end (4122) of the filter cartridge chamber (412) and the air inlet (310) of the engine (30).

11. The intake and exhaust system (100) according to claim 10, wherein a pipeline (4130) coupled between the expansion chamber (413) and the air inlet (310) of the engine (30) is provided with a throttle (4132).

12. The intake and exhaust system (100) according to claim 10 or 11, wherein the expansion chamber (413) is provided with two air outlet ends (4131) coupled to two air inlets (310) of the engine (30), respectively.

13. The intake and exhaust system (100) according to any one of claims 7 to 12, wherein the first air intake chamber (411) and the filter cartridge chamber (412) are located behind a front passenger position (50).

14. The exhaust system according to any one of claims 1 to 13, wherein the first intake and exhaust structure (20) further comprises a second air intake chamber (230) provided above the transmission (10), the second air intake chamber (230) defines two air outlet holes (2301) coupled to ends of two intake pipes (220) away from the transmission (10) respectively.

15. An all-terrain vehicle (1000), comprising:
an engine (30);
a transmission system (70) provided behind the engine (30) and comprising a transmission (10); and
an intake and exhaust system (100) according to any one of claims 1 to 14,
wherein the intake and exhaust system (100) comprises an expansion chamber (413) located between an air filter (410) and the air inlet (310) of the engine (30), and the expansion chamber (413) is located above the transmission system (70).
